## Europäisches Patentamt

## European Patent Office

## Office européen des brevets

(11) Veröffentlichungsnummer: **0 201 886**
A2

(12) **EUROPÄISCHE PATENTANMELDUNG**

(21) Anmeldenummer: **86106383.2**

(22) Anmeldetag: **10.05.86**

(51) Int. Cl.⁴: **B 64 F 1/34**

(30) Priorität: **14.05.85 DE 3517301**

(43) Veröffentlichungstag der Anmeldung:
**20.11.86 Patentblatt 86/47**

(84) Benannte Vertragsstaaten:
**AT BE CH FR GB IT LI LU NL SE**

(71) Anmelder: **Schulz, Hans Egmund**
**Im Teich 69**
**D-6085 Nauheim(DE)**

(71) Anmelder: **Rössler, Ralf**
**Luisantring 9**
**D-6457 Maintal/Hochstadt(DE)**

(72) Erfinder: **Schulz, Hans Egmund**
**Im Teich 69**
**D-6085 Nauheim(DE)**

(72) Erfinder: **Rössler, Ralf**
**Luisantring 9**
**D-6457 Maintal/Hochstadt(DE)**

(74) Vertreter: **Schumacher, Bernd, Dipl.-Ing.**
**Am Schwaberg 13**
**D-6450 Hanau 6(DE)**

(54) Flugzeug-Stromversorgungseinrichtung.

(57) Bei einer Flugzeug-Stromversorgungseinrichtung mit Starkstromleitern wird vorgeschlagen, diese im Bereich eines Steuerteils über Steckverbindungsglieder zu koppeln, um die Ausfallzeiten zu reduzieren. Vorzugsweise wird ein Kabelkopf benutzt, der an dem Steuerteil lösbar festgelegt ist und die elektrische Steckverbindung mit entsprechenden Gliedern im Steuerteil selbsttätig herstellt. Gleichzeitig kann der Kabelkopf ein seitliches Aufnahmeglied haben, an dem ein Haken eines mit dem Kabelkopf über Kabel verbundenen Mehrfachbuchsenteils eingehängt werden kann. Hierdurch kann im unbenutzten Zustand der Stromversorgungseinrichtung die lichte Höhe unterhalb einer Fahrgastbrücke reduziert werden.

Fig. 2

EP 0 201 886 A2

Beschreibung

Die Erfindung betrifft eine Flugzeug-Stromversorgungseinrichtung gemäß dem Oberbegriff von Anspruch 1.

In bekannter Weise werden die Starkstromleiter der mehradrigen Verbindungskabel im Inneren des Steuerteils miteinander verbunden, so daß eine durchgehende Starkstromversorgung des Mehrfachbuchsenteils möglich ist. Ferner werden im Steuerteil Meß- und Steuerleitungen der Verbindungskabel an eine elektrische Steuereinheit angeschlossen. Diese besitzt unter anderem ein Tastenfeld für Schaltvorgänge, wie zum Ein- sowie Ausschalten der Starkstromversorgung und zum Ab- sowie Aufwickeln einer an der Fahrgastbrücke befindlichen Kabelaufnahme, von der das Steuerteil mit dem Mehrfachbuchsenteil herabhängt. Die Starkstromleiter werden im Steuerteil im allgemeinen in der Weise verbunden, daß jeweils zwei elektrisch parallelgeschaltete Leiter von der Bodenstation an einen etwas dickeren Leiter von dem Mehrfachbuchsenteil angeschlossen werden. Da ein Drehstromsystem zur Anwendung kommt, sind im Steuerteil vier durchgehende Starkstromverbindungen mit drei Phasenleitern und einem Nulleiter herzustellen. Zu diesem Zweck werden die jeweils drei Leiterenden beispielsweise in einer zusammenzuquetschenden Hülse gehalten. Nach Herstellung aller Verbindungen erfolgt ein Vergießen des Steuerteils. Diese Arbeitsvorgänge sind sehr zeitraubend und außerdem wegen des geringen Raumes im Steuerteil kompliziert. Wegen der relativ starken Beanspruchung und damit verbundenen Abnutzung im Bereich der Kabel und des Mehrfachbuchsenteils müssen die Starkstromverbindungen im Steuerteil von Zeit zu Zeit erneuert werden, was bedeutet, daß die jeweilige Stromversorgungseinrichtung über längere Zeit, beispielsweise während eines ganzen Arbeitstages, nicht einsatzbereit ist.

Der vorliegenden Erfindung liegt daher die Aufgabe zugrunde, eine
Stromversorgungseinrichtung der genannten Art so auszubilden, daß
unter Vermeidung der geschilderten Nachteile die elektrischen Kabelverbindungen am Einsatzort schnell und einfach hergestellt werden können.

Zur Lösung der gestellten Aufgabe zeichnet sich eine Flugzeug-
Stromversorgungseinrichtung der im Oberbegriff genannten Art durch
die im Kennzeichen von Anspruch 1 aufgeführten Merkmale aus. Die
Steckverbindung der Starkstromleiter ermöglicht ein sehr schnelles
Verbinden (und auch Lösen) derselben, so daß bei einer Kabelerneuerung nur äußerst kurze Reparatur- sowie Ausfallzeiten anfallen.
Außerdem sind die Verbindungsarbeiten ausgesprochen einfach.

Eine besonders bevorzugte Ausführungsform ergibt sich aus Anspruch
2. Hierbei wird lediglich der gemeinsame Kabelkopf am Steuerteil
angeflanscht, wobei die im Kabelkopf und im Steuerteil verankerten
Steckverbindungsglieder selbsttätig in einen gegenseitigen elektrischen Eingriff gelangen. Wenn beispielsweise das Mehrfachbuchsenteil oder die zu diesem führende Kabelverbindung abgenutzt ist,
werden diese Glieder mit dem Kabelkopf vom Steuerteil abgenommen
und der Kabelkopf eines neuen Stromversorgungsteils am Steuerteil
angeflanscht. Dieser Vorgang dauert nur wenige Minuten, so daß
sich hieraus ein großer Zeit- und Kostenvorteil ergibt. Durch den
Anflanschvorgang des Kabelkopfs am Steuerteil läßt sich ferner
eine äußerst sichere elektrische Verbindung herstellen.

Gemäß Anspruch 3 ist es zweckmäßig, im Kabelkopf als Steckverbindungsglied eine Aufnahmebuchse vorzusehen, in die ein Kontaktbol-

zen des Steckverbindungsglieds im Steuerteil eingreift. Dadurch steht im Steuerteil ein größerer freier Raum für die einzelnen Leiter zur Verfügung.

Gemäß Anspruch 4 können die Steckverbindungsglieder im Kabelkopf in einer Vergußmasse verankert sein, wodurch einerseits ein fester Halt und andererseits eine gegenseitige elektrische Isolierung der Steckverbindungsglieder gewährleistet sind. Da der Kabelkopf mit dem Mehrfachbuchsenteil und der zugehörigen Kabelverbindung eine lösbare, zusammenhängende Einheit darstellt, verlängert der Vergießvorgang des Kabelkopfes nicht die Reparaturzeit am Ort des Steuerteils.

Mit den Merkmalen von Anspruch 5 läßt sich eine besonders einfache Verbindung zwischen den Starkstromleitern und den Steckverbindungsgliedern herstellen. Dieses kann beispielsweise durch Löten oder Quetschen im Bereich der Aufnahmebohrungen erfolgen.

Um ein zeitraubendes und für Reparaturvorgänge lästiges Vergießen des Steuerteils zu vermeiden, ist es gemäß Anspruch 6 bevorzugt, die einzelnen Steckverbindungsglieder lösbar zu fixieren. Zu diesem Zweck werden die Steckverbindungsglieder an einer separaten Aufnahmeplatte festgelegt, die ihrerseits am Steuerteil und zwar zwischen einer offenen Stirnwand desselben und dem Kabelkopf, fixiert wird. Wenn demnach das das Steuerteil mit der Bodenstation verbindende Kabel auszuwechseln oder zu reparieren ist, kann dieses ebenfalls leicht und schnell durchgeführt werden, da die Aufnahmeplatte mit den Steckverbindungsgliedern jederzeit vom Steuerteil abgenommen werden kann und somit ein freier Zugang zu den gegebenenfalls zu kürzenden Leiterenden besteht.

0201886

Da gemäß den Ansprüchen 7 und 8 die Aufnahmebuchsen vorzugsweise längsgeschlitzt und vorgespannt sind, kann ein wirksamer Klemmeffekt erzielt werden. Außerdem wird hierdurch auch das Einführen der Kontaktbolzen erleichtert.

Bei einer bevorzugten Ausführungsform gemäß den Ansprüchen 9 und 10 weist jedes Steckverbindungsglied im Steuerteil eine oder mehrere Aufnahmebohrungen und einen Kontaktbolzen auf. Dadurch ist es möglich, gegebenenfalls parallelzuschaltende bodenseitige Starkstromleiter in einfacher, sicherer und raumsparender Weise miteinander zu koppeln.

Um eine leichte Montierbarkeit der Steckverbindungsglieder im Steuerteil zu gewährleisten, ist es gemäß Anspruch 11 zweckmäßig, diese an der Aufnahmeplatte im Bereich des Kontaktbolzens mittels Halteelementen, wie Seegeringen, lösbar zu fixieren. Da dieses Halteelement in einer Aussparung der Aufnahmeplatte zu liegen kommt, kann diese ungehindert zwischen der Stirnwand des Steuerteils und dem Kabelkopf befestigt werden.

Gemäß Anspruch 12 ist der Kabelkopf am Steuerteil vorzugsweise durch Verschraubungsmittel zu halten, die gemäß Anspruch 13 zweckmäßigerweise miteinander zu verschraubende Gewindebolzen und Muttern aufweisen. Stattdessen können auch andere Schnellverbindungsmittel eingesetzt werden, die ein sicheres Halten des Kabelkopfes am Steuerteil gewährleisten.

Gemäß einer besonders zweckmäßigen Ausführungsvariante nach Anspruch 14 besteht die Möglichkeit, im unbenutzten Zustand

das Mehrfachbuchsenteil mittels eines Hakens am Kabelkopf anzuhängen, damit die lichte Durchfahrthöhe unter diesen Teilen vergrößert wird.  Üblicherweise ist das von der Bodenstation zum
Steuerteil führende Kabel auf einer Kabelaufnahme in Form einer
Kabelrolle unterhalb einer Fahrgastbrücke aufgewickelt,so daß das
Steuerteil und das Mehrfachbuchsenteil hiervon herabhängen.  Mit der
genannten Maßnahme läßt sich das Mehrfachbuchsenteil im unbenutzten
Zustand günstiger, das heißt am Kabelkopf bzw. Steuerteil, unterbringen.  Das Merkmal von Anspruch 15 ermöglicht eine besonders
sichere und ortsgünstige Aufhängung.

Da das Steuerteil bzw. ein Steuermodul desselben mit dem Mehrfachbuchsenteil auch über Steuerleitungen zu verbinden ist, ist es
gemäß den Ansprüchen 16 und 17 zweckmäßig, diese an Verbinder
im Bereich der Trennstelle zwischen Kabelkopf und Aufnahmeplatte
anzuschließen.  Die Steuerleitungen sind in die Vergußmasse des
Kabelkopfes eingebettet, damit die Steuerleitungen gegenüber den
Starkstrom führenden Steckverbindungsgliedern geschützt und lagefixiert gehalten sind.

Die Merkmale der Ansprüche 18 und 19 ermöglichen eine sichere und
dichte lösbare Einführung des bodenseitigen Kabels in das Steuerteil.

Die Erfindung wird nachfolgend an zeichnerisch dargestellten Ausführungsbeispielen näher erläutert.  Es zeigen:

Figur 1 - in einer schematischen Ansicht eine Stromversorgungseinrichtung mit einem über Kabel mit einem Mehrfachbuchsenteil und einer Bodenstation verbundenen Steuerteil,

Figur 2 -  in einem schematischen Schnitt das Steuerteil aus Figur 1 mit einem Steckverbindungsanschluß zum Mehrfachbuchsenteil,

Figur 3 -  in einem schematischen Teilschnitt ein Kontaktbolzen-Steckverbindungsglied im Steuerteil und

Figur 4 -  das Steckverbindungsglied aus Figur 3 in einer Stirnansicht.


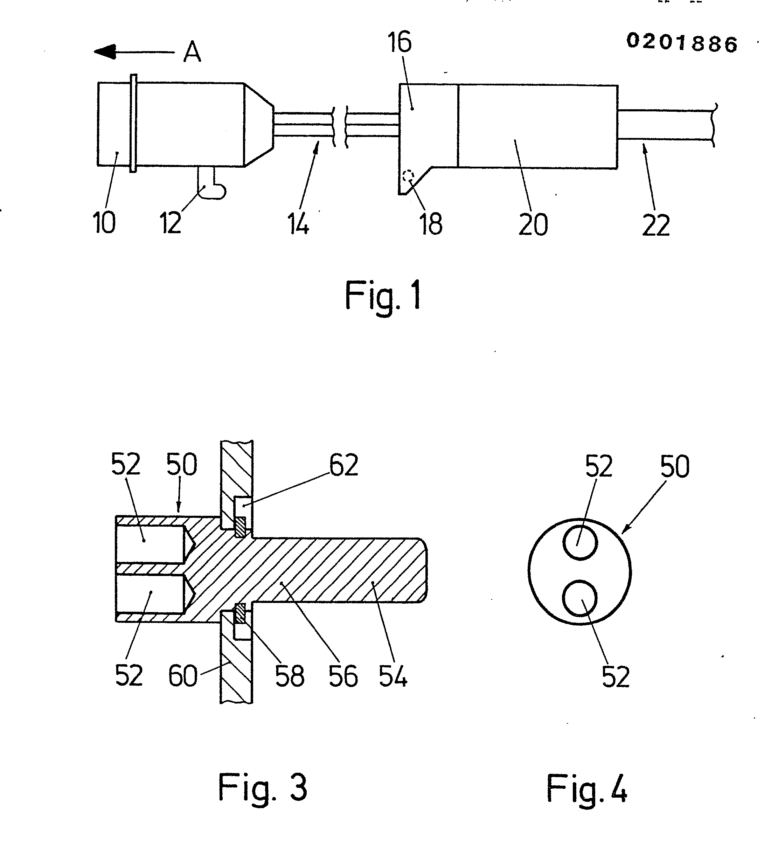

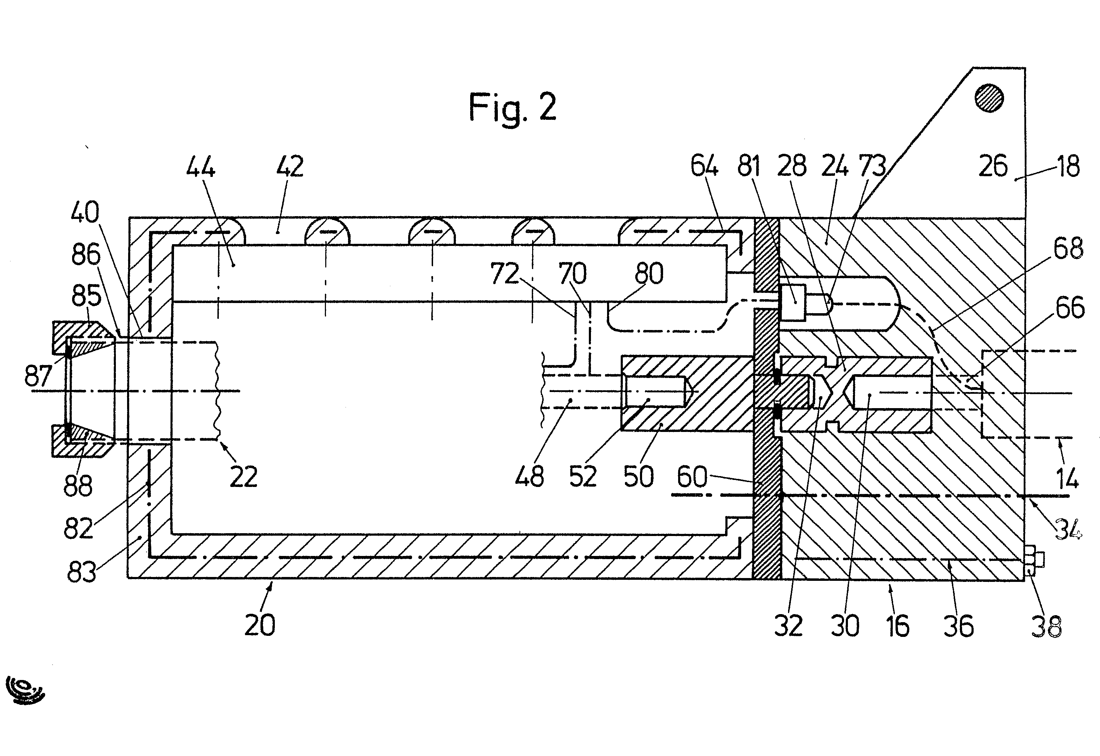

Gemäß Figur 1 ist ein in Pfeilrichtung A mit einem bordseitigen Mehrfachsteckerteil zu verbindendes Mehrfachbuchsenteil 10 mit einem seitlichen Haken 12 versehen und über mehrere Kabel 14 mit einem Kabelkopf 16 verbunden.  Dieser weist ein seitliches Aufnahmeglied 18 zum Festlegen des Hakens 12 auf und ist an einem Steuerteil 20 angeflanscht, das seinerseits über ein mehradriges Kabel 22 mit einer nicht dargestellten Bodenstation verbunden ist.  Im vorliegenden Fall kann das Aufnahmeglied 18 zwei seitliche Vorsprünge mit einer sich dazwischen erstreckenden Querstange 26 zum Einhängen des Hakens 12 aufweisen.  Üblicherweise ist das Kabel 22 auf einer Kabelrolle unterhalb einer mit einem Flugzeug verbindenden Fahrgastbrücke aufgewickelt.  Durch Bedienen entsprechender Taster am Steuerteil 20 kann das Kabel 22 von der Kabelrolle abgewickelt und auf diese aufgewickelt werden.  Mit Ein- und Aus-Tastern am Steuerteil 20 läßt sich eine Starkstromverbindung zum Flugzeug über die Kabel 14 und 22 herstellen.


Im ungenutzten Zustand der Stromversorgungseinrichtung kann das Mehrfachbuchsenteil 10 mittels des Hakens 12 und des Aufnahmegliedes 18 Aussparung am Kabelkopf 16 bzw. Steuerteil 20 aufgehängt werden, um die lichte Durchfahrthöhe unter der Fahrgastbrücke zu vergrößern.

Das Kabel 22 kann innerhalb einer gemeinsamen Umhüllung beispielsweise sieben dicke Starkstromleiter und mehrere Steuer- bzw. Meßleitungen aufweisen. Die Starkstromleiter gehören zu einem Drehstromsystem, wobei jeweils zwei Leiter zu einer Phase zusammengeschaltet sind und der siebte Leiter den Nulleiter darstellt. Auf
diese Weise können flugzeugseitig verschiedene Spannungen zwischen
den Phasenleitern einerseits und einem Phasenleiter sowie dem Nullleiter andererseits zur Verfügung gestellt werden. Bei den Kabeln
14 handelt es sich beispielsweise um vier Einzelkabel mit jeweils
einem dicken Starkstromleter und einer Steuerleitung. Die Starkstromleiter der Kabel 14 und 22 (drei Phasenleiter und ein Nullleiter) sind im Bereich des Kabelkopfes 16 sowie des Steuerteils 20
miteinander zu verbinden, wie es noch näher im Zusammenhang mit
Figur 2 erläutert wird.

Gemäß Figur 2 weist der Kabelkopf 16 eine Vergußmasse 24 auf, an
der seitlich das Aufnahmeglied 18 mit der Querstange 26 ausgebildet ist und in der vier elektrisch leitende Steckverbindungsglieder 28 verankert (eingegossen) sind. Jedes Steckverbindungsglied
28 hat eine rückseitige Aufnahmebohrung 30 zum Festlegen, wie zum
Einlöten, des Endes eines Starkstromleiters 66 der Kabelverbindung
zum Mehrfachbuchsenteil 10. Ferner hat jedes Steckverbindungsglied
28 eine nach außen geöffnete Aufnahmebuchse 32. Die vier Steckverbindungsglieder 28 der drei Phasenleiter und des Nulleiters
sind in nicht näher dargestellter Weise im Kabelkopf 16 so angeordnet, daß ihre Längsachsen die Ecken eines Rechtecks oder Quadrats bilden. Während in Figur 2 hinter dem dargestellten Steckverbindungsglied 28 ein weiteres Steckverbindungsglied angeordnet
ist, befinden sich die beiden anderen Steckverbindungsglieder im Bereich der Längsachse 34 (zur Vereinfachung der Zeichnung ist an dieser Stelle kein Steckverbinungsglied eingezeichnet). Die Steckverbindungsglieder 28 sind im Kabelkopf 16 etwas zu einer Seite verlagert, damit an der anderen Seite genügend Platz für andere Teile verbleibt.

Der Kabelkopf 16 ist über Verschraubungsmittel an einem kastenartigen Steuerteil 20 mit einem nicht dargestellten abnehmbaren Deckel angeflanscht. Das Steuerteil 20 weist im vorliegenden Fall einen Blechrahmen 82 mit einem Kunstoffmantel 83 auf. Mehrere am Blechteil 82 fixierte Gewindebolzen 36 durchdringen in nicht näher dargestellter Weise entsprechende Öffnungen im Kabelkopf 16 und sind an dessen Stirnseite mit haltenden Muttern 38 verschraubt. Stattdessen können zum Anflanschen des Kabelkopfes 16 am Steuerteil 20 auch andere sichere Schnellverbindungsmittel verwendet werden. Zwischen dem Steuerteil 20 und dem Kabelkopf 16 ist eine Aufnahmeplatte 60 eingespannt, die an einer mit einer Öffnung 74 versehenen Stirnwand 64 des Steuerteils 20 anliegt.

Das Steuerteil hat an seinem zum Kabelkopf 16 entgegengesetzten Ende eine Kabeleinführung 40 zum Einführen des Kabels 22 und an einer Längsseite beispielsweise vier Tastschalter-Öffnungen 42, unterhalb derer sich ein Steuermodul 44 mit geeigneten Schaltern und Steuerleitungsverbindungen befindet. Gemäß Figur 2 ist das Ende eines Starkstromleiters 48 des Kabels 22 in die Aufnahmebohrung 52 eines Steckverbindungsglieds 50 eingeführt und hiermit verbunden wie verlötet. Das leitende Steckverbindungsglied 50 greift mit einem Kontaktbolzen 54 durch die Aufnahmeplatte 60 in die Aufnahmebuchse 32 des Steckverbindungsglieds 28 im Kabelkopf 16. Weitere Einzelheiten ergeben sich aus Figur 3.

In Figur 2 ist zur Vereinfachung der Zeichnung ebenfalls nur ein Steckverbindungsglied 50 dargestellt, obwohl vier derartige Glieder vorhanden sind. Ferner ist aus Figur 2 ersichtlich, daß das Steuermodul 44 über Steuerleitungen 80 mit einzelnen Steuerleitungen 68 der Kabel 14 vom Mehrfachbuchsenteil 10, ferner mit Meßrückleitungen 70 von den Starkstromleitern 48 des Kabels 22 und mit Steuerleitungen 72 aus dem Kabel 22 verbunden ist. Die zur Bodenstation zurückgeführten Meßrückleitungen 70 dienen dem Zweck, mittels einer bodenseitigen Regeleinrichtung eine leistungsunabhängige Versorgungsspannung zur Verfügung zu stellen. Die Steuerleitungen 68 sind innerhalb des Kabelkopfes 16 aus den Kabeln 14 herausgeführt, separat in die Vergußmasse 24 eingebettet und jeweils an einen Verbinder 73, wie Steckverbinder, in einem Hohlraum 89 des Kabelkopfes 16 angeschlossen. Die Verbinder 73 sind wiederum mit jeweils einem Verbinder 81 koppelbar, der an die entsprechende Steuerleitung 80 angeschlossen ist.

Gemäß Figur 3 sind die Steckverbindungsglieder 50 derart ausgebildet, daß sie jeweils zwei Aufnahmebohrungen 52 für zwei parallelgeschaltete Starkstromleiter 48 des Kabels 22 haben. Dieses gilt zumindest für die drei Phasenleiter des Drehstromsystems, so daß ein problemloser Übergang von jeweils zwei dünneren, parallelgeschalteten Phasenleitern des Kabels 22 in einen dickeren Phasenleiter 66 des Kabels 14 möglich ist. Gemäß Figur 3 kann sich zwischen dem eigentlichen Kontaktbolzen 54 und dem Bereich der Aufnahmebohrungen 52 ein verdicktes Zwischenglied 56 mit einem darauf befindlichen Halteelement 58, wie einem Seegering, befinden. Dieses Zwischenglied 56, bzw. ein Teil des Kontaktbolzens 54, durchdringt eine nicht näher bezeichnete Öffnung in der Aufnahmeplatte 60, wobei das Halteelement 58 in einer Aussparung 62 der Aufnahmeplatte 60 so zu liegen kommt, daß das Steckverbindungsglied 50 an der Aufnahmeplatte 60 lösbar fixiert ist. Die Aufnahmeplatte 60 kann dann in nicht näher dargestellter Weise von
außen an der Stirnwand 64 des Steuerteils 20 fixiert, wie angeschraubt, werden.  Die Buchsenlamellen der längsgeschlitzten
Aufnahmebuchsen 32 können auch durch einen umfassenden Haltering
oder dergleichen vorgespannt sein, um einen sicheren Kontakt und
ein einfaches Einführen der Kontaktbolzen 54 zu gewährleisten.

Gemäß Figur 2 ist die Kabeleinführung 40 rohrförmig mit einem
Außengewinde 84 ausgebildet und an dem Blechrahmen 82 fixiert.
Auf dem Außengewinde 84 sitzt eine Mutter 85, die über eine Scheibe 87 eine keilförmige Kunststoffdichtung 88 gegen das Kabel 22
drückt.  Dieses erhält dadurch eine Zugentlastung und eine Feuchtigkeitsabdichtung im Bereich der Kabeleinführung 40.

Die neue Stromversorgungseinrichtung ist ausgesprochen wartungs-
und bedienungsfreundlich.  Die Starkstromleiter lassen sich sehr
schnell sicher miteinander verbinden, so daß in kürzester Zeit
die aus Kabelkopf 16, Kabel 14 und Mehrfachbuchsenteil 10 bestehende Austauscheinheit auswechselbar ist.  Auch im Inneren des
Steuerteils 20 lassen sich die Starkstromleiter leicht und schnell
anschließen.  Darüber hinaus ermöglicht der Kabelkopf ein äußerst
zweckmäßiges Anhängen des Mehrfachbuchsenteils, so daß die störenden Einflüsse einer unbenutzten Stromversorgungseinrichtung vermieden
werden.  Da der Kabelkopf 16 am Steuerteil 20 im Bereich der
Steckverbindungsglieder  geführt und darüber hinaus sicher festgelegt ist, ergibt sich eine ausgesprochen dauerhafte, robuste
Verbindung.

Flugzeug-Stromversorgungseinrichtung

Patentansprüche

1. Flugzeug-Stromversorgungseinrichtung mit einem Mehrfachbuchsenteil (10), das mit einem bordseitigen Mehrfachsteckerteil zu verbinden ist, und mit einem Steuerteil (20), das mit dem Mehrfachbuchsenteil sowie einer Bodenstation über ein-oder mehradrige Kabel (14, 22) mit am Steuerteil miteinander gekoppelten Starkstromleitern (48, 66) verbunden ist, gekennzeichnet durch eine lösbare verriegelbare Steckverbindung (28, 50) zwischen den vom Steuerteil (20) zur Bodenstation und zum Mehrfachbuchsenteil (10) führenden Starkstromleitern (48, 66).

2. Einrichtung nach Anspruch 1, dadurch gekennzeichnet, daß die Starkstromleiter (66) vom Mehrfachbuchsenteil (10) mit in einem gemeinsamen Kabelkopf (16) verankerten separaten Steckverbindungsgliedern (28) verbunden sind und daß der Kabelkopf am Steuerteil (20) anflanschbar ist, wobei die Steckverbindungsglieder (28) mit im Steuerteil verankerten entsprechenden Steckverbindungsgliedern (50) der Starkstromleiter (48) von der Bodenstation verbindbar sind.

3. Einrichtung nach Anspruch 2, dadurch gekennzeichnet, daß die Steckverbindungsglieder (28) im Kabelkopf (16) mit elektrisch leitenden Aufnahmebuchsen (32) und im Steuerteil (20) mit hiermit in Eingriff tretenden elektrisch leitenden Kontaktbolzen (54) ausgebildet sind.

4. Einrichtung nach Anspruch 2 oder 3, dadurch gekennzeichnet, daß die Steckverbindungsglieder (28) im Kabelkopf (16) in einer Vergußmasse (24) verankert sind.

5. Einrichtung nach einem der Ansprüche 1 bis 4, dadurch gekennzeichnet, daß die Starkstromleiter (66,48) endseitig in Aufnahmebohrungen (30, 52) der Steckverbindungsglieder (28,50) gehalten sind.

6. Einrichtung nach einem der Ansprüche 1 bis 5, dadurch gekennzeichnet, daß die separaten Steckverbindungsglieder (50) der zu Bodenstation führenden Starkstromleiter (48) in einer Aufnahmeplatte (60) lösbar gehalten sind, die zwischen dem Steuerteil (20) und dem Kabelkopf (16) an einer mit einer Offnung (74) versehenen Stirnwand (64) des Steuerteiles (20) lösbar und durch Anziehen von Verschraubungsmitteln, wie Muttern (38), wasserdicht festgelegt ist.

7. Einrichtung nach einem der Ansprüche 1-6, dadurch gekennzeichnet, daß die im Kabelkopf (16) befindlichen Aufnahmebuchsen (32) mehrfach längsgeschlitzt sind.

8. Einrichtung nach einem der Ansprüche 1 bis 7, dadurch gekennzeichnet, daß die mehrfach längsgeschlitzten Aufnahmebuchsen (32) elastisch zusammengehalten sind, wie durch jeweils zumindest einen die Buchsenlamellen umgebenden Ring.

9. Einrichtung nach einem der Ansprüche 1 bis 8, dadurch gekennzeichnet, daß die leitenden Steckverbindungsglieder (50) der Starkstromleiter (48) von der Bodenstation jeweils eine oder mehrere Aufnahmebohrungen (52) für einen oder mehrere parallelgeschaltete Starkstromleiter (48) und einen gemeinsamen Kontaktbolzen (54) aufweisen.

10. Einrichtung nach Anspruch 9, gekennzeichnet durch parallele Längsachsen der Aufnahmebohrungen (52) und des hierzu in
entgegengesetzter Richtung weisenden Kontaktbolzens (54).

11. Einrichtung nach Anspruch 10, gekennzeichnet durch ein die
    Aufnahmeplatte (60) durchdringendes, in den Kontaktbolzen
    (54) übergehendes Zwischenglied (56) mit einem in einer
    Aussparung (62) der Aufnahmeplatte zu liegen kommenden lösbaren Halteelement (58), wie einem Seegering.

12. Einrichtung nach einem der Ansprüche 1 bis 11, gekennzeichnet
    durch Verschraubungsmittel (36, 38) zum lösbaren, wasserdichten
    Verspannen des Kabelkopfes (16) am Steuerteil (20).

13. Einrichtung nach Anspruch 12, dadurch gekennzeichnet, daß die
    Verschraubungsmittel im Steuerteil (20) verankerte und den
    Kabelkopf (16) durchsetzende Gewindebolzen (36) sowie Muttern
    (38) aufweisen.

14. Einrichtung nach einem der Ansprüche 1 bis 13, dadurch gekennzeichnet, daß der Kabelkopf (16) eine zum haltenden Aufnehmen
    eines am Mehrfachbuchsenteil (10) befindlichen Hakens (12)
    dienende,seitlich geöffnete Aussparung oder ein seitlich
    überstehendes Aufnahmeglied (18), vorzugsweise mit einer Querstange (26), aufweist.

15. Einrichtung nach Anspruch 14, dadurch gekennzeichnet, daß ein
    abgewinkeltes Hakenende des seitlichen Hakens (12) zu der
    Kabelverbindung (14) zwischen dem Mehrfachbuchsenteil (10)
    und dem Kabelkopf (16) oder entgegengesetzt hierzu weist.

16. Einrichtung nach einem der Ansprüche 1 bis 15, gekennzeichnet
    durch von Kabeln (14) vom Mehrfachbuchsenteil (10) im Kabelkopf (16) verlaufende Steuerleitungen (68), die auf Verbinder (73
    wie Steckverbinder, in einem Hohlraum (89) im Kabelkopf (16)
    geführt sind.

17. Einrichtung nach einem der Ansprüche 1 bis 16, gekennzeichnet
    durch Steuerleitungen (80) die von einem Steuermodul (44)
    im Steuerteil (20) durch die Aufnahmeplatte (60) auf Verbinder (81), wie Schraub- und/oder Steckverbinder,geführt sind.

18. Einrichtung nach einem der Ansprüche 1 bis 17, gekennzeichnet durch eine rohrförmige Kabeleinführung (40), die mit
    einem, von einem Kunststoffmantel (83) umgebenen Blechrahmen (82) des Steuerteils (20) verbunden ist, und ein
    Innen- oder Außengewinde (84) aufweist.

19. Einrichtung nach Anspruch 18, gekennzeichnet durch eine mit
    der Kabeleinführung (40) verbindbare Mutter (85), wie eine
    Überwurfmutter bei einem Außengewinde (84), die über eine
    Scheibe (87) eine Kunstoffdichtung (88) gegen das zur Bodenstation führende Mehrleiterkabel (22) preßt und somit eine
    Zugentlastung sowie Feuchtigkeitsdichtung hervorruft.

0201886

Fig. 1

Fig. 3

Fig. 4

Fig. 2